# EUROPEAN PATENT SPECIFICATION

(11) **EP 1 171 288 B1**
(45) Date of publication and mention of the grant of the patent: **04.05.2005**
(21) Application number: 00914280.3
(22) Date of filing: 30.03.2000
(51) Int. Cl.: B32B 5/08, B32B 17/04

(54) **COMPOSITE COMPRISING STRUCTURAL AND NON STRUCTURAL FIBERS**
LAMINAT MIT STRUKTUR- UND NICHTSTRUKTURFASERN
COMPOSITE COMPRENANT DES FIBRES STRUCTURELLES ET NON STRUCTURELLES

(30) Priority: 30.03.1999 GB 9907204
(43) Date of publication of application: 16.01.2002
(73) Proprietor: CYTEC TECHNOLOGY CORP., Wilmington, Delaware 19801 (US); Matrice Material Systems Limited, Poulton-le-Fylde, Lancashire FY6 8GD (GB)
(72) Inventor: WOOLSTENCROFT, David, Harold, Poulton-le-Fylde, Lancashire FY6 8GD (GB)
(74) Representative: Findlay, Alice Rosemary
(86) International application number: PCT/GB2000/001217
(87) International publication number: WO 2000/058083

(56) References cited:
- EP-A- 0 488 389
- EP-A- 0 632 087
- US-A- 5 251 414
- PATENT ABSTRACTS OF JAPAN vol. 018, no. 257 (C-1200), 17 May 1994 (1994-05-17) & JP 06 033329 A (MITSUBISHI RAYON CO LTD), 8 February 1994 (1994-02-08) cited in the application

## Description

The present invention relates to a composite and a method of composite manufacture.

Composite materials generally comprise an array of reinforcing fibres in a resin matrix. The present global industries which utilise composite structures, for example the aerospace industry, predominantly use conventional uni-directional and fabric-based prepregs. Such prepregs are typically made by drawing continuous rovings of reinforcing fibres, or fabrics, through a bath of molten resin or resin dissolved in solvents. The prepreg is then formed into a desired shape, loaded into a mould which is closed and heated to cure the resin.

Over the last five to seven years an alternative technology for manufacturing composite parts has emerged which is generally termed liquid composite moulding. In liquid composite moulding, a dry fibrous reinforcement is loaded into a mould or tool and the resin is injected or infused into the fibres and cured.

The reinforcement is termed a "preform" which term is well known to those skilled in the art of composite as indicating an assembly of dry fibres that constitutes the reinforcement component of a composite in a form suitable for use in a liquid composite moulding process. A preform is typically an assembly of various textile forms such as fabrics, braids or mats, tailored or shaped as necessary, and is assembled as a specific operation prior to being placed into or on the mould tool.

Liquid composite moulding technologies, such as the RTM (resin transfer moulding) or vacuum infusion methods are perceived by many to be the solution to the problem of making composite parts in a number of intractable situations, such as large aerospace primary structures and high volume structural automotive components. The benefits that liquid composite moulding technologies are perceived to offer over conventional prepregs are reduced scrap and lay-up time, non-dependence upon drape and increased shelf life properties.

However, liquid composite moulding does possess its own problems, particularly, when the end use applications require high toughness and where control of curing cycle time is critical.

Structural parts require a high degree of toughness for most applications and this is especially true of aerospace primary components. The solution to introducing high toughness in an aerospace grade composite has traditionally been to toughen the matrix -- usually by the introduction of a second phase additive such as a thermoplastic polymer to the base epoxy resin matrix.

Various approaches have been employed for the addition of a thermoplastic material into the resin. The thermoplastic may be blended with the unreacted thermoset resin at elevated temperatures to produce a single phase, unreacted melt. A limitation of this approach is the level of thermoplastic that can be added to enhance toughness. As the high molecular weight thermoplastic dissolves into the resin, the viscosity of the blend rises steeply. However the very nature of the process of introducing the resin into the reinforcing fibres requires that the resins rheological properties, viscosity and elasticity are such as to allow infiltration of the resin throughout the fabric preform. This is essential if the resulting composite structure is to be free of voids and long injection times and high injection temperatures are to be avoided. Conventional toughened epoxies are extremely viscous systems which means that high pressures and massive tools are required with the necessity of heating the resins and difficulties in matching curing time and injection-fill cycles.

Thermoplastic may also be added in the form of a continuous solid film which is placed between two layers of fibre. In such processes the thermoplastic layer is generally known as the interleaf layer. A process of this type is disclosed in European Patent Application No. 0327142 which describes a composite which comprises a solid continuous layer of a thermoplastic material placed between two layers of fibre impregnated with thermosetting resin. On heating the thermosetting layers and the interleaf layers remain as discrete layers.

A problem with the interleaf approach is that the solid thermoplastic film does not dissolve into the resin during the heat processing stage. As a result, although the final composite may show the desired increase in toughness, there is a weak resin-thermoplastic interface. The weak interface between the interlayer and matrix can cause poor resistance to cracking between plies especially when exposed to a moist environment.

Thermoplastic material may also be introduced in a powdered form. An example of this technique is disclosed in European Patent Application No. 0274899 where the thermoplastic material is either added to the resin before the prepreg is prepared or sprinkled onto the prepreg surface.

The use of powders presents a problem in that it is difficult to ensure that an even distribution of powder is supplied to the resin. There is therefore an uneven loading of the thermoplastic material with the result that the composite will have regions of different toughnesses. Furthermore, incorporation of powdered thermoplastic material in the resin is not suitable for liquid composite moulding techniques because the viscosity of the resin is increased when the particles are added to it according to standard Newtonian theory with all the consequent disadvantages as discussed above.

If the powder particles are of a similar size to the spaces between fibres, then the process of infiltration of the resin into the fibres may also result in the thermoplastic powders being filtered out leading to an agglomeration of powder where the resin enters the mould and powder free resin in the bulk of the final composite.

Whether the powdered thermoplastic is added to the resin or to the prepreg, the amount which can be incorporated is limited. Thus, so too is the toughening effect and, in general, to achieve a reasonable improvement in toughness, expensive structural thermoplastics have to be employed.

It has been proposed, in Japanese Patent Application 6-33329, to include thermoplastic in the form of fibres. The Application discloses a reinforcement fibre mix comprising 99-80% by weight of carbon fibres or graphite fibres and 1-20% by weight of thermoplastic resin. The composite includes only uni-directional fibres and the approach is disclosed solely as useful in a classic prepreg technique.

A good composite is one having a combination of physical properties particularly suited to a specific application. The physical properties of the composite product are determined by, amongst other things, the physical properties of the solidified resin matrix material and the structural material, and the uniformity of distribution of the matrix material and the structural material in the composite. Best results are achieved where the matrix material is intimately in contact with all of the structural material.

It is therefore desirable that the resin matrix material is of such a consistency (viscosity) that it covers (wets) all of the structural material and, if necessary, fills the interstices formed in the structural material. Uniform wetting is particularly difficult to achieve where the structural material is of complex structure, for example where it is a preform, or where the ratio of the matrix material to support is particularly low.

The viscosity of the matrix material is affected by the number and types of additives. There therefore arises the problem that, although a liquid or a gel matrix material, comprising one or more additives may possess suitable physical properties when solidified, the viscosity of the liquid or gel matrix material may be too high to facilitate its even distribution around the support material, particularly where the support is complex. This results in a composite product lacking the physical characteristics expected.

Normally to achieve a good combination of properties a composite material will consist of a number of constituents. Typically for an aerospace grade prepreg there will be a high performance fibre reinforcement combined with a complex polymeric resin matrix mix. This matrix mix normally consists of a thermosetting resin blended with various additives. These latter additives enhance the toughness of the basic resin. Such systems have complex flow characteristics and whilst they can be easily combined with fibres in a prepreg form, their use in other manufacturing techniques is limited. As for instance an attempt to use such a complex resin in an injection or resin transfer process in a complex fibre preform may result in the filtering out of additives and a non uniform product.

There is therefore a need for method of composite manufacture which overcomes the above mentioned problems particularly for large complex structures.

In accordance with a first aspect of the present invention there is provided a composite comprising a structural component and a resin component, the structural component comprising structural fibres and a toughening additive comprising non-structural thermoplastic fibres and the resin component comprising a non-thermoplastic material, and the structural component being a preform formed from the structural fibres and the thermoplastic fibres.

In accordance with a second aspect of the present invention, there is provided a structural reinforcement for use in a composite comprising a preform formed from structural fibres and non-structural thermoplastic fibres, wherein all or part of the structural fibres are combined with the non-structural thermoplastic fibres in the preform, and wherein the overall volume fraction of the structural fibres in the preform is at least 65%.

The term "structural fibre" as used herein refers to fibres which add to the strength of the ultimate composite such as glass or carbon fibres and which therefore have a modulus of elasticity greater than 50 GPa.

The term "non-structural fibre" as used herein refers to fibres which are not provided for increasing the strength of the ultimate composite as they have a modulus of elasticity less than 20 GPa. Thus known strengthening fibres formed from materials such as Kevlar are not non-structural fibres within the terms of the present Application.

The form of the structural reinforcement enables removal of all toughening additives from the resins thus allowing use of low viscosity epoxy systems and so making impregnation of large parts feasible with sensible pressures, lightweight low cost tooling and manageable cycle times. Furthermore a significantly greater amount of toughening additive can be included without compromising any of the processability aspects of liquid composite moulding techniques.

Accordingly, in accordance with a third aspect of the present invention there is provided a method of manufacture of a composite comprising forming a preform from structural fibres with non-structural thermoplastic fibres to provide a structural component, injecting a liquid resin into the structural component, and curing the liquid resin component.

By incorporating the toughening additive into the structural component prior to addition of the resin, a lower viscosity resin may be utilised i.e. a resin substantially free of the toughening additive.

By toughening is meant the ability to increase the energy required to cause final fracture, which may manifest itself in the ability to absorb energy during impact. Such ability may be measured by suitable impact testing methods which will be known to the skilled man. Thermoplastic polymers are known to increase the ability to absorb impact energy in structural composites. By suitable formation of the preform they may be dispersed throughout the final composite to give homogenous impact resistance or introduced at specific locations to provide a zonal toughening mechanism as required in some composite parts.

Preferably, the toughening additive is a thermoplastic material whose latent heat of melting may absorb a proportion of exothermic curing energy but which, upon completion of curing, reverts to its solid form without loss of toughening capacity. Preferably, the curing agent, resin and thermoplastic additive are selected to provide a curing step which is at least partially carried out below the melting point of the said thermoplastic additive to thereby allow absorption of some of the energy of curing in the melting or phase change of the additive should excessive exotherm occur. Preferably, the curing step is commenced below the temperature of the melting point of the additive and may go above the temperature of the melting point during the curing cycle.

Injection of low viscosity resins (heated or otherwise) can decrease the injection-fill part of the processing cycle. However, it is also necessary to decrease the cure cycle time. This could be achieved by very active resins, higher temperature etc - but the risk is always the generation of an excessive exotherm - particularly in thick parts, which would lead to a degraded or damaged final part.

Preferably, the toughening additive comprises semi-crystalline thermoplastic fibres.

A very rapid cure can be affected without risking excessive exotherms if semi-crystalline thermoplastic fibres are used as the toughening additive. Heat generated by cure at an appropriate temperature can be used to generate crystalline melting within the fibres. The latent heat of crystalline melting will then moderate the temperature rise in the thermosetting resin. The selection of toughening fibres with appropriate crystalline melting temperature allows the cure cycle to be driven to its maximum potential without risk of composite damage. The semi-crystalline fibres themselves will simply revert to their original condition on cooling and the process will not affect the ultimate toughness of the parts.

Preferred toughening additives include:- polyethylene, polypropylene, polyamides, polyethylene terephthalate, polyether-ether-ketone.

Preferably, the toughening additive is sufficient to improve the impact energy of absorption of the untoughened composite by at least 30%, most preferably, by at least 50%.

Preferably, the percentage by volume of the toughening additive in the final composite is more than 2%, more preferably, more than 5%, most preferably, more than 10%.

Preferably, the percentage by volume of the toughening additive in the final composite is not more than 30%, more preferably, not more than 25%, most preferably, not more than 20%. It is particularly preferred that the percentage toughening additive by volume in the final composite is not more than 15%.

The percentage by volume of structural fibres in the preform is preferably at least 65%. The minimum value of 65% ensures that there is sufficient structural fibres to give the required strength. Furthermore, the quantity of non-structural thermoplastic fibres in the preform is insufficient to allow direct conversion of the material into a fully consolidated thermoplastic composite by a thermal processing route. However the proportion of toughening fibres, that is, the thermoplastic fibres is high in comparison to known methods in which thermoplastic is added in particulate form and so the toughening effect is commensurately much greater than that achieved with those known methods.

Preferably, the melt temperature of the toughening additive is not the same as the curing temperature of the resin component. It can be between 80-350°C, more preferably between 100-250°C, but its final selection will depend upon the parameters of the base matrix material. Suitably it may be 20°C above the curing temperature although it has been found that with some materials, at least, it may actually be preferable for the thermoplastic fibres to melt.

The ability of the composite to be produced using a low viscosity resin will implicitly increase the rate at which a mould can be filled. However, the problem of controlling resin cure times remains. A key factor always in resin injection is ensuring that the resin fills the mould and wets the reinforcement totally before it cures. However fill time and cure time are linked and the resin begins to cure as soon as it is mixed before injection, and this process continues throughout the injection cycle.

In a preferred embodiment, the injection and cure stages of the process are separated by removing curing agents from the resin formulation. A resin curing agent is instead added to the structural component prior to the injection of the resin component. Preferably, the curing agent is temperature activated. The curing agent may be added to the structural component by dispersion into the thermoplastic fibres.

It is now possible to obtain commercially, curing agents that are available in solid powder form and which only become active at a specific temperature. This capability particularly arises when the curing agent is encapsulated in a thermoplastic solid with a very specific melting temperature. The micronised curing agents may be dispersed in the structural reinforcement and the resin can then be injected hot without any risk of premature reaction. Resin cure can then be triggered when desired by simply raising the temperature to the critical temperature to activate the dispersed curing agents.

This embodiment allows curing of the resin prior to its addition to the structural component to be prevented. This avoids timing problems where the resin viscosity rises due to curing prior to its addition to the structural component or during the addition process. This provides a much greater degree of control over the processing and also provides more flexibility in terms of composite structures because lower viscosity resins provide less processing problems. For instance, composites with thick laminated structures may benefit whereas in prior art methods difficulties were experienced in providing sufficient resin in the middle layers and the areas of the layers furthest from the edges.

The temperature activated curing agents provide still greater control by providing the possibility of completing the resin addition prior to curing and then raising the temperature to activate curing once satisfactory mixing of resin and structural components has been accomplished. This curing operation may be very rapid as high reactivity resins can be used and the thermoplastic fibres provide the ability to moderate an exothermic temperature rise. Furthermore it allows the possibility of improved quality assurance by enabling mould filling to be checked and rectified if in error without the concern that cure is already taking place.

Suitable resin curing temperatures, suitable curing agents for particular resins and temperatures, and melting points of thermoplastic polymers are well known to those of ordinary skill in the art.

A further preferred feature is the use of a textile veil as part of the preform by being sandwiched between layers of the structural component.

The veil, preferably has a greater absorbency rate than the structural component layer(s) either due to its thinness or the inherent absorbency or structure of the veil material or a combination of these characteristics. Accordingly, in some embodiments, it is preferred that a veil layer is provided sandwiched between the structural layers and provides means to increase the rate of infiltration of resin into the structure. Advantageously, by this means, the resin may be preferentially directed into the centre of thicker structures than has hitherto been possible.

A veil is a very fine layer of non-woven fibrous material which is typically produced by a paper making route. The veil will act to assist resin infiltration into the core of a preform by virtue of a greater resin absorbency rate than the rest of the preform. By sandwiching veils between layers of fabrics, resin may accordingly be directed into the centre of thick preforms more rapidly than has been possible hitherto. The veil will also act to provide selective toughening by being positioned at the interface between layers of fabrics which is a prime location for delamination in a composite part.

Preferably, the veil is a thin layer of fibres produced by a paper making route. Preferably, the veil is less than 100g/m², more preferably less than 50g/m², most preferably less than 30g/m². The veil will provide a combination of fibre bridging with yielding and crack deflection. The veil may also provide toughening by comprising a mixture of non-structural thermoplastic fibres and structural fibres.

Preferably the veil comprises no more than 70% non-structural thermoplastic fibres, more preferably no more than 60%. The veil may contain a minimum of 20% non-structural thermoplastic fibre. The amount of non-structural thermoplastic fibre is however determined by the need to maintain an appropriate overall structural fibre content within the preform.

The veil may also contain curing agents. If the veils are distributed throughout the preform or attached to all fabrics used in the part, then it would be possible to remove the curing agents from both the resin and from the other materials used to form the preform.

A preferred feature of such a veil is the presence of a binder material distributed on or in the veil which is, preferably, activated by the resin, preferably, by the temperature of the resin. A suitable binder is a thermoplastic with a melting point lower than that of the incoming resin. Alternatively, the resin temperature may be raised subsequent to ingress into the veil to thereby activate the binder. It is also possible to coat the binder directly onto the surface structure which is then placed between the layers of the structural component to be subsequently temperature activated but this is not as convenient as incorporating it into the veil.

In a preferred feature, the temperature of the incoming resin dissolves the binder but is not sufficient to commence curing which then takes place in a subsequent heating step. In this manner, thick sandwiched fibre fabrics and textiles may be securely bound together to form the preform prior to the curing step.

Preferably, the resin is a thermosetting resin, more preferably, an epoxy resin.

The preform may include a textile which may be a woven or non-woven fabric. The textile may comprise a hybrid yarn i.e. structural fibres and toughening fibres commingled in a hybrid yarn or the textile may comprise structural yarn and toughening yarn mixed in a single textile. Preferably the toughening fibres are commingled with the structural fibres to form the hybrid yarn. Hybrid yarns with different ratios of non-structural thermoplastic fibres and structural fibres may be used in the same fabric or textile. Similarly hybrid yarns containing mixtures of different non-structural thermoplastic fibres and structural fibres may be used in the same fabric, textile or preform.

The basic concept of using hybrid yarns can be varied considerably. It is possible to replace all yarns in a preform with a hybrid yarn, or alternatively to replace only a section. Furthermore a large preform may consist of zones of conventional or toughened fabrics according to the needs of the part. This offers a processing advantage in that a single resin system can be used for a large part but the properties of the composite can differ in terms of toughness, and temperature capability from place to place - hence making one shot moulding of complex structures more feasible.

The properties of the composite can be varied widely by making the preform of different forms. For example, with a woven fabric the pattern in which the structural fibres and the thermoplastic fibres are provided will have an effect on the overall behaviour of the composite. The use of a structural reinforcement in the form of a textile therefore enables great versatility.

Embodiments of the present invention will now be further described with reference to the accompanying examples and drawings in which:-
Figure 1a shows a schematic laminar composite in accordance with the present invention;
Figure 1b shows the upper layer of the laminar composite of Figure 1a with a schematic impact region;
Figure 1c shows the schematic construction of the upper layer of the laminar composite of Figure 1a;
Figure 1d shows an exploded schematic view of yield zone 2 shown in Figure 1b;
Figure 2a shows a hybrid veil sandwiched between two structural layers in a laminate;
Figure 2b shows a possible construction for the hybrid veil of Figure 2a;
Figure 2c shows an alternative construction for the hybrid veil of Figure 2a;
Figure 3 shows absorbed energy versus volume fraction x thickness for various examples, and
Figures 4 to 6 show plots of impact strength as a function of thickness x volume fraction of fibres for a composite formed from glass fibres alone, Figure 4, glass fibres and polypropylene fibres, Figure 5, and glass fibres and polyamide fibres, Figure 6.

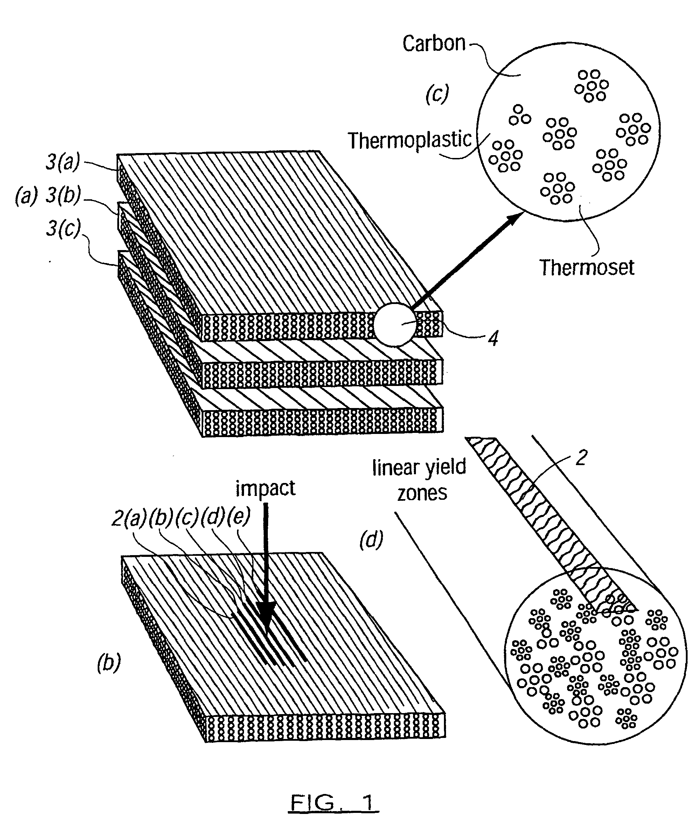

Figure 1a reveals a composite with a laminar structure of three superimposed identical flat rectangular layers: upper layer 3a; middle layer b and lower layer c. The internal structure is shown more clearly by Figure 1c which is an explosion of inset 4. The explosion shows each layer is formed from a hybrid fabric comprising yarns of structural fibre, e.g. carbon fibre interspersed with yarns of thermoplastic fibre set in a thermosetting resin matrix.

Figure 1b and Figure 1d show schematically the effect of an impact on the surface of the upper layer 3a. In particular, Figure 1b reveals a series of diagonal linear yield zones from the theoretical impact and Figure 1d shows an explosion of a linear yield zone 2 and reveals that the yield zone corresponds to a thermoplastic yarn extending in the composite layer.

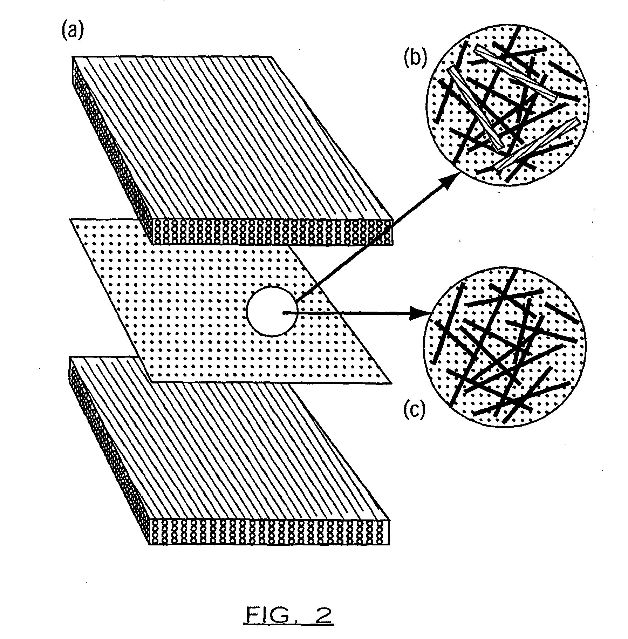

Referring to Figure 2, this shows a schematic laminar composite construction similar to that of Figure 1 but with a hybrid veil sandwiched between two layers of textile. The sandwiched veil introduces toughening into the textile composite. Two alternatives of the veil construction are shown in Figures 2b and c. Figure 2b shows schematically the construction of mixed structural and non-structural fibres and thermoplastic powder whereas Figure 2c shows a singular construction of carbon fibres and thermoplastic powder. In both cases the delamination resistance and some toughening is provided by fibre bridging between the textile layers and the fibrous veil. However this is greatly enhanced by the presence of thermoplastic in the veil layer.

By appropriate design of the interply veil, the resin flow rate across the veil may be enhanced relative to the flow rate across the upper and lower structural layers and thus improve the rate of injected resin impregnation into the composite.

In both cases, the curing agent may be present with the structural components prior to the addition of the resin so that the curing process may be activated at the appropriate temperature once satisfactory "wetting" of the structural component has taken place.

### Example 1

A composite was prepared from a fabric preform that consisted of glass fibres commingled with polypropylene fibres in a quadriaxial non crimp fabric. The fabric was impregnated with a low viscosity unsaturated polyester resin and the laminate was cured at room temperature followed by a post cure at 80°C in accordance with the resin supplier's specification.

The plate was 3 mm thick and the volume fractions of the three components as follows:-
glass fibres 0.2 v/v;
polypropylene fibres 0.2 v/v; and
polyester resin 0.6 v/v.
The laminate was subjected to a falling weight impact test to measure its energy absorption. The specific test configuration used produces absorbed energy results for glass fibre composites that fall in a master curve determined by the thickness of the laminate and the volume fraction of fibres. The energy absorbed by the laminate prepared from the preform with polypropylene fibres added as toughening agents was 100 J.

In contrast, a similar laminate produced from identical polyester resin 0.8 v/v but reinforced with a fabric that was totally produced from glass fibres of a fibre volume fraction of 0.2 v/v and a thickness of 3 mm absorbed an average of approximately 40 J. This demonstrates that addition of the thermoplastic fibres into the preform provides a considerable toughness benefit.

### Example 2

A glass fibre epoxy composite was prepared from a DGEBA epoxy resin (digylcidyl ether of bisphenol-A cured with an amine hardener [Shell Epikote 828 cured with Ciba HY932 aromatic amine]) and a plain weave woven fabric of E-glass fibres. The fabric occupied approximately 50% by volume of the composite. A similar composite was prepared with the same level of fabric but where the fabric component contained 70% (by volume) E-glass fibres and 30% by volume of a semi-crystalline polymeric fibre, with a crystalline melting temperature of 210°C.

The composites were produced by impregnating the fabrics and laminating to a thickness of 6cm thick and cured in an oven set at 190°C. Thermocouples embedded in the centre of the laminate monitored the temperature rise in the materials as they initially equilibriated to the oven temperature and then experienced further temperature rises due to the exothermic curing process.

The laminate with just glass fibres exhibited a temperature rise well beyond the 190°C oven temperature which became rapid and reached a peak value of 300°C at which point significant degradation of the epoxy was observed. The laminate with semi-crystalline thermoplastic fibre also exhibited a temperature rise due to the exothermic cure but once this temperature reached the crystalline melting temperature of the thermoplastic fibres, the overall temperature rise was halted and the epoxy resin did not noticeably degrade.

### Example 3

A carbon fibre composite, 3 mm thick, was prepared from a plain weave fabric and an epoxy resin (digylcidyl ether of bisphenol A cured with an amide hardener [Shell Epikote 828 cured with Ciba HY932 aromatic amine]). The fabric contained 70% by volume carbon fibres (Torayca T300) and 30% by volume nylon 6.6 fibres. The fabric was impregnated with the liquid epoxy resin and cured at room temperature for 24 hours followed by a post cure at 100°C for 4 hours. The cured laminate contained approximately 50% carbon fibres by volume and 21% of nylon fibres by volume. The remaining 29% of the composition was cured epoxy resin. A similar composite was prepared by impregnating a fabric produced exclusively from carbon fibres. In this case the plain weave carbon fibre occupied 50% of the volume of the composite and the epoxy resin matrix occupied the remaining 50%.

Both laminates were subjected to excess energy, falling weight impact tests. The laminate comprising just carbon fibres and an epoxy matrix absorbed 50 J of energy. The laminate with the carbon fibres, nylon fibres and epoxy matrix absorbed 85 J.

### Examples 4 to 7

Tests have been conducted with a series of medium volume fraction glass fibre composites which exhibit impact toughness (energy absorbed during drop weight impact with full penetration) which is enhanced by a factor of 2-3 times by inclusion of thermoplastic fibres in comparison to the unmodified analogues. Tests have also shown a remarkable lack of sensitivity to notches in open hole tension tests on the same materials.

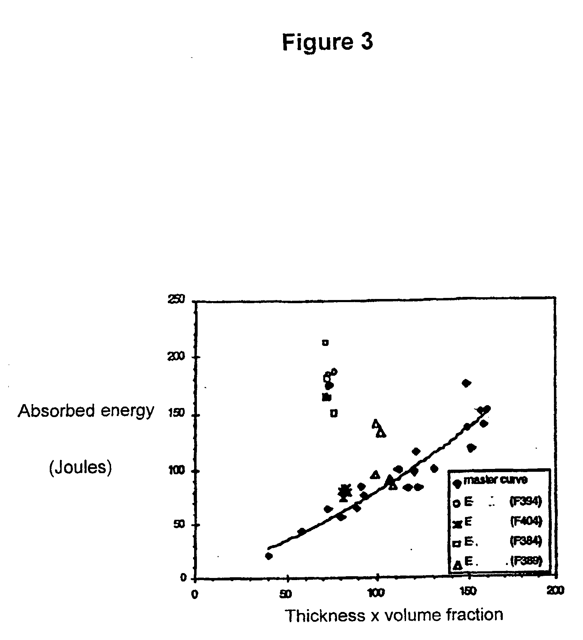

The impact results of two materials against two control samples are shown in Figure 3 and Table 1 defines the materials tested.

**Table 1**

| Comparison of toughened and non-toughened composite laminates. | | | |
|---|---|---|---|
| Examples | Product | % Volume Fraction Structural Component | Structural components |
| Example 4 | (F394) | 22-23 | Glass/polypropylene/ polyester |
| Example 5 | (F404) | 41 | Glass/polyester |
| Example 6 | (F384) | 22-23 | Glass/polypropylene/ polyester |
| Example 7 | (F389) | 25 | Glass/polyester |

The structural components each comprised about 50:50, glass to toughening additive, by volume.

Figure 3 shows the impact results for the Examples 4-7 as a plot of absorbed energy against thickness x volume of fibres. The impact master curve for SMC (sheet moulding composite), GMT's (glass mat thermoplastics) and prepreg etc. has been superimposed for comparative purposes. The absorbed energy for the polypropylene and polyester containing composites is significantly improved by comparison with analogous composites having no toughening additive.

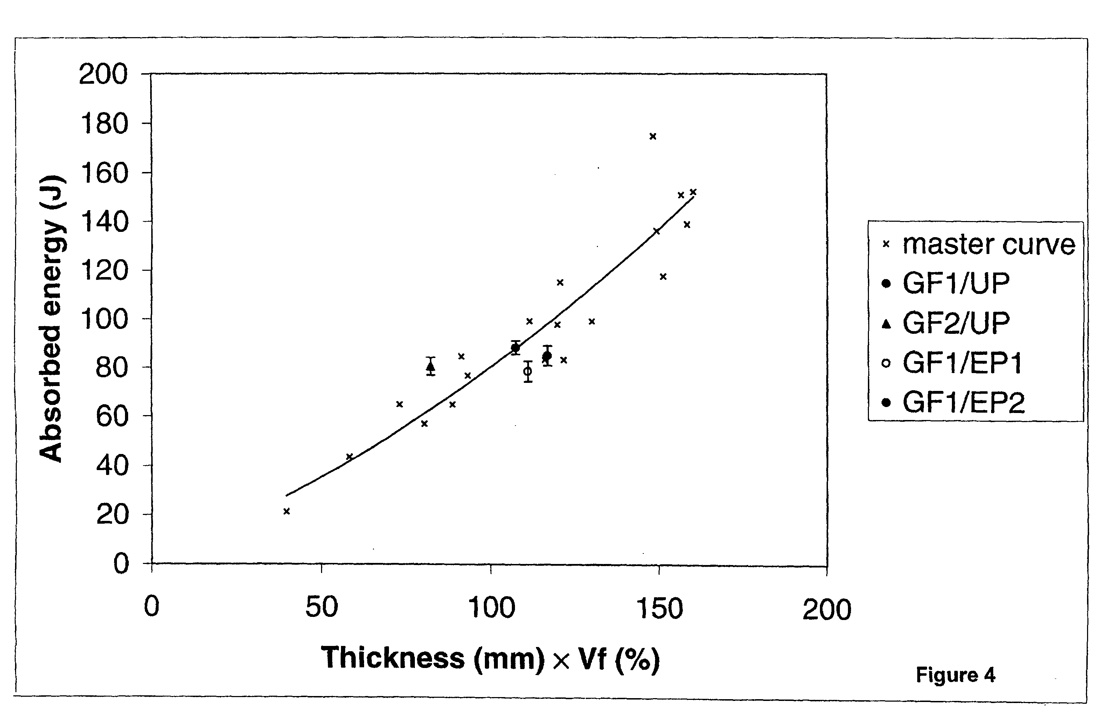

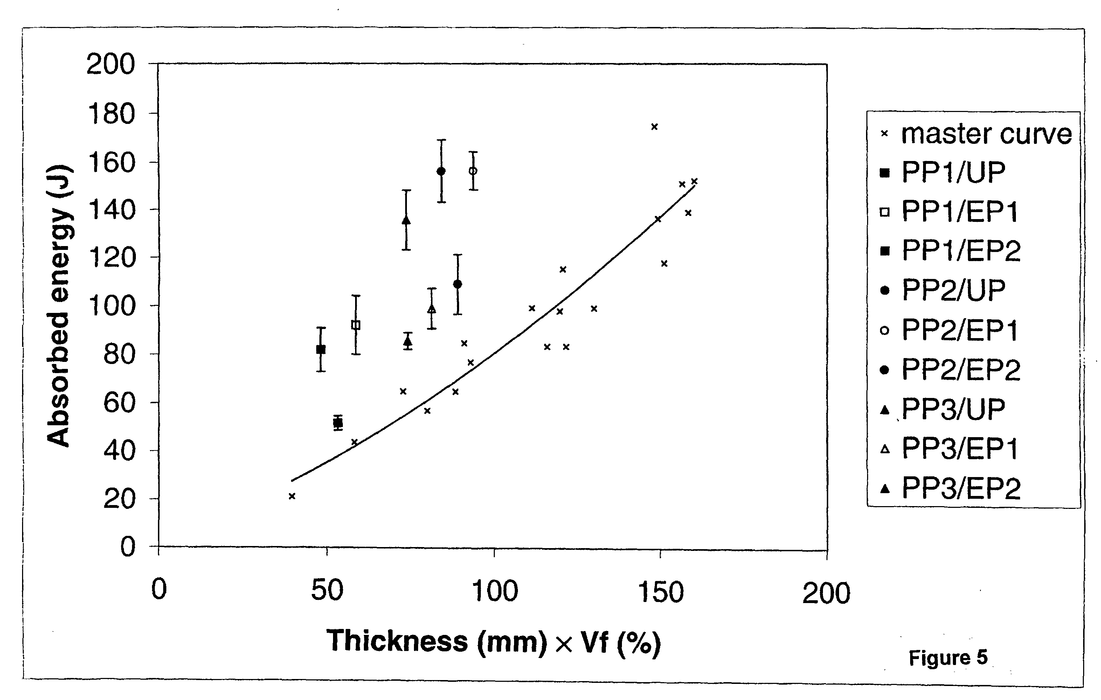

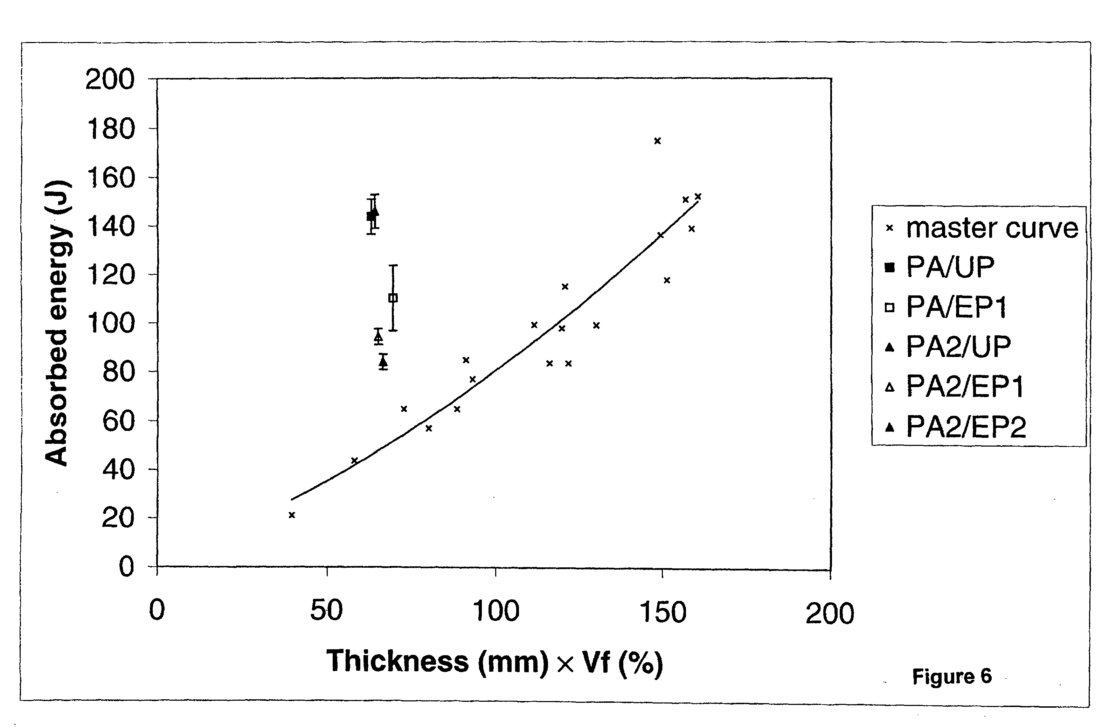

Figures 4 to 6 are plots showing impact strength, that is, energy absorbed during penetration, as a function of thickness x volume fraction of fibres. Each plot has data from three different thermoset matrices - two epoxies and a polyester. The first plot of Figure 4 shows the results achieved when glass fibres alone are used with the volume fraction of glass fibres in the composite being between 30 to 50%. The second and third plots of Figures 5 and 6 show the results when the portion of the glass fibres is replaced by polypropylene, Figure 5, and polyamide, Figure 6. The plots demonstrate that the inclusion of the thermoplastic polymers provide significant benefits in terms of improved impact strength. Furthermore the effect is consistent with different matrices.

The resins used in the study which produced the plots of Figures 4 to 6 included an unsaturated isophthalic polyester resin (UP), Crystic 272 (a product of Scott Bader plc) and two epoxy systems, EP1 was a cold cure epoxy resin (digylcidyl ether of bisphenol A cured with an amide hardener (Shell Epikote 828 cured with Ciba HY932 aromatic amine) and EP2 was a low single-part, low-viscosity epoxy resin supplied by Cytec-Fiberite, Cycom 823, which was cured at 120°C.

The experimental procedure in all of these tests involved the use of an instrumented falling weight impact test in which a striker equipped with a 20 mm diameter hemispherical tip is allowed to fall onto a plate specimen of the test composite. The composite specimen is a thin plate, typically 3mm thick, and 60mm x 60 mm in size which is simply supported on a steel ring with an internal diameter of 40 mm. The striker is dropped from a height of 1m and has sufficient mass such that the kinetic energy is sufficient for the striker to completely penetrate the specimen. The test records the forces during the impact event and the energy absorbed is calculated from the force time record and the measured velocity of the striker as it impacts the specimen.

The use thermoplastic fibres incorporated into the resin matrix provides a thermoplastic region in the thermosetting matrix which gives a mechanism for plastic deformation and yielding which is not possible in the unmodified thermosetting resin on its own. The low viscosity of the unmodified thermosetting resin makes it feasible to mould large parts in reasonable time periods and to use low injection pressure for the process which will also eradicate any problems with fibre wash near the injection points due to the applied pressures.

The invention has the potential to make a number of composite fabrication techniques more effective in being able to handle a greater range of matrix formulations and their efficiency with existing systems can be increased as flow and wet out times can be reduced. This will result in a reduction in the time taken to manufacture a component.

## Claims

1. A composite comprising a structural component and a resin component, the structural component comprising structural fibres and a toughening additive comprising non-structural thermoplastic fibres and the resin component comprising a non-thermoplastic material, and the structural component being a preform comprising an assembly formed from the structural fibres and the non-structural thermoplastic fibres, wherein the assembly comprises non-structural thermoplastic fibres which are in fibre form in the final composite, wherein the composite does not comprise a sheet-formed fibre reinforcing material composed of reinforcing fibres and a non-woven fabric laminated on at least one side of the fibre reinforcing material, the short fibres constituting the non-woven fabric passing through the fibre reinforcing material to integrate the fibre reinforcing material with the non-woven fabric.

2. A composite as claimed in Claim 1 wherein the resin component is a thermosetting resin composition.

3. A composite as claimed in either Claim 1 or Claim 2 wherein the resin component is a low viscosity thermosetting resin composition.

4. A composite as claimed in any preceding Claim wherein the percentage by volume of the toughening additive in the composite is more than 2% but less than 30%.

5. A composite as claimed in any preceding Claim wherein the volume of the toughening additive is more than 5% but less than 25%.

6. A composite as claimed in any preceding Claim wherein the volume of the toughening additive is more than 10% but less than 20%.

7. A composite as claimed in any preceding Claim wherein the structural reinforcement component is provided in the form of a plurality of layers of textile and at least one veil is provided between a pair of adjacent layers, the veil comprising a thin layer of woven or unwoven material.

8. A composite as claimed in any preceding Claim wherein the volume fraction of the structural fibres in the preform is at least 65%.

9. Use of a structural reinforcement in the manufacture of a composite by liquid composite moulding, the structural reinforcement comprising a preform comprising a dry fibre assembly formed from structural fibres and non-structural thermoplastic fibres, wherein the composite does not comprise a sheet-formed fibre reinforcing material composed of reinforcing fibres and a non-woven fabric laminated on at least one side of the fibre reinforcing material, the short fibres constituting the non-woven fabric passing through the fibre reinforcing material to integrate the fibre reinforcing material with the non-woven fabric.

10. A structural reinforcement for use in a composite comprising a preform which comprises a dry fibrous assembly formed from structural fibres and non-structural thermoplastic fibres, the volume fraction of the structural fibres in the preform being at least 65%.

11. A structural reinforcement as claimed in Claim 10 wherein at least some of the thermoplastic fibres are semi-crystalline.

12. A structural reinforcement as claimed in either Claim 10 or Claim 11 further comprising a resin curing agent.

13. A structural reinforcement as claimed in Claim 12 wherein the curing agent is temperature activatable.

14. A structural reinforcement as claimed in any one of Claims 10 to 13 wherein the preform comprises layers of textile and the reinforcement component additionally includes at least one veil between an adjacent pair of layers, the veil being formed from a thin layer of woven or unwoven material.

15. A structural reinforcement as claimed in Claim 14 wherein the veil includes thermoplastic fibres.

16. A structural reinforcement as claimed in Claim 14 or Claim 15 wherein binder material is distributed on or in the veil.

17. A structural reinforcement as claimed in any one of Claims 14 to 16 wherein the veil has a greater absorbency rate for resin than the fibres.

18. A structural reinforcement as claimed in Claims 10 to 17 wherein the preform includes a textile comprising a hybrid yarn of commingled structural fibres and thermoplastic fibres or yarn of structural fibres and yarn of thermoplastic fibres.

19. A method of making a composite comprising forming a preform by combining dry structural fibres with dry non-structural thermoplastic fibres in an assembly to provide a structural fabric component, injecting or infusing a liquid resin into the structural fabric component, and curing the liquid resin component, wherein the composite does not comprise a sheet-formed fibre reinforcing material composed of reinforcing fibres and a non-woven fabric laminated on at least one side of the fibre reinforcing material, the short fibres constituting the non-woven fabric passing through the fibre reinforcing material to integrate the fibre reinforcing material with the non-woven fabric.

20. A method as claimed in Claim 19 wherein a resin curing agent is added to the structural component prior to the resin component.

21. A method as claimed in Claim 20 wherein the curing agent is encapsulated in a material which melts at a first temperature and wherein the curing step involves raising the temperature to the first temperature to activate the curing agent.

22. A method as claimed in any one of Claims 19 to 21 wherein the curing step is at least partially carried out at a temperature below the melting point of the thermoplastic fibres.

23. A method as claimed in any one of Claims 19 to 22 wherein the preform is provided in a plurality of layers of textile and a veil is provided between at least one adjacent pair of layers prior to addition of the resin, the veil comprising a thin layer of woven or non-woven material.

24. A method as claimed in Claim 23 comprising distributing binder material on or in the veil.

25. A method as claimed in any one of Claims 19 to 24 wherein the resin injection process is resin transfer moulding or composite resin injection moulding.

## Patentansprüche

1. Verbundmaterial, umfassend eine strukturelle Komponente und eine Harzkomponente, wobei die strukturelle Komponente strukturelle Fasern und ein schlagzähigkeitsverbesserndes Zusatzmittel umfasst, welches nichtstrukturelle thermoplastische Fasern umfasst, und die Harzkomponente ein nicht thermoplastisches Material umfasst, und die strukturelle Komponente ein Vorformling ist, welcher eine Anordnung umfasst, die aus den strukturellen Fasern und den nichtstrukturellen thermoplastischen Fasern gebildet ist, wobei die Anordnung nichtstrukturelle thermoplastische Fasern umfasst, welche im Endverbundmaterial in Faserform sind, wobei das Verbundmaterial kein zu einer Folie geformtes Faserverstärkungsmaterial umfasst, das sich aus Verstärkungsfasern und einem Non-Woven-Gewebe zusammensetzt, das auf wenigstens einer Seite des Faserverstärkungsmaterials laminiert ist, wobei die kurzen Fasern das durch das Faserverstärkungsmaterial passierende Non-Woven-Gewebe bilden, um das Faserverstärkungsmaterial mit dem Non-Woven-Gewebe zu integrieren.

2. Verbundmaterial gemäß Anspruch 1, wobei die Harzkomponente eine wärmehärtbare Harzzusammensetzung ist.

3. Verbundmaterial gemäß Anspruch 1 oder 2, wobei die Harzkomponente eine wärmehärtbare Harzzusammensetzung geringer Viskosität ist.

4. Verbundmaterial gemäß einem der vorhergehenden Ansprüche, wobei der Volumenprozentanteil des schlagzähigkeits-verbessernden Zusatzmittels im Verbundmaterial mehr als 2 %, aber weniger als 30 % ist.

5. Verbundmaterial gemäß einem der vorhergehenden Ansprüche, wobei das Volumen des schlagzähigkeitsverbessernden Zusatzmittels mehr als 5 %, aber weniger als 25 % ist.

6. Verbundmaterial gemäß einem der vorhergehenden Ansprüche, wobei das Volumen des schlagzähigkeitsverbessernden Zusatzmittels mehr als 10 %, aber weniger als 20 % beträgt.

7. Verbundmaterial gemäß einem der vorhergehenden Ansprüche, wobei die strukturelle Verstärkungskomponente in Form einer Mehrzahl von Textilschichten bereitgestellt wird und wenigstens ein Schleier zwischen einem Paar von benachbarten Schichten bereitgestellt wird, wobei der Schleier eine dünne Schicht von gewebtem oder ungewebtem Material umfasst.

8. Verbundmaterial gemäß einem der vorhergehenden Ansprüche, wobei der Volumenanteil der strukturellen Fasern im Vorformling wenigstens 65 % beträgt.

9. Verwendung einer strukturellen Verstärkung bei der Herstellung eines Verbundmaterials durch ein Flüssigverbundformverfahren, wobei die strukturelle Verstärkung einen Vorformling umfasst, welcher eine Trockenfaseranordnung, die aus strukturellen Fasern und nichtstrukturellen thermoplastischen Fasern gebildet ist, umfasst, wobei das Verbundmaterial kein zu einer Folie geformtes Faserverstärkungsmaterial umfasst, das sich aus Verstärkungsfasern und einem Non-Woven-Gewebe zusammensetzt, das auf wenigstens einer Seite des Faserverstärkungsmaterials laminiert ist, wobei die kurzen Fasern das durch das Faserverstärkungsmaterial passierende Non-Woven-Gewebe bilden, um das Faserverstärkungsmaterial mit dem Non-Woven-Gewebe zu integrieren.

10. Strukturelle Verstärkung zur Verwendung in einem Verbundmaterial, welcher einen Vorformling umfasst, der eine Trockenfaseranordnung, welche aus strukturellen Fasern und nichtstrukturellen thermoplastischen Fasern gebildet ist, umfasst, wobei der Volumenanteil der strukturellen Fasern im Vorformling wenigstens 65 % beträgt.

11. Strukturelle Verstärkung gemäß Anspruch 10, wobei wenigstens einige der thermoplastischen Fasern semikristallin sind.

12. Strukturelle Verstärkung gemäß Anspruch 10 oder 11, welche ferner ein Harzvernetzungsmittel umfasst.

13. Strukturelle Verstärkung gemäß Anspruch 12, wobei das Vernetzungsmittel temperaturaktivierbar ist.

14. Strukturelle Verstärkung gemäß einem der Ansprüche 10 bis 13, wobei der Vorformling Textilschichten umfasst und die Verstärkungskomponente zusätzlich wenigstens einen Schleier zwischen einem benachbarten Paar von Schichten umfasst, wobei der Schleier aus einer dünnen Schicht von gewebtem oder ungewebtem Material gebildet ist.

15. Strukturelle Verstärkung gemäß Anspruch 14, wobei der Schleier thermoplastische Fasern umfasst.

16. Strukturelle Verstärkung gemäß Anspruch 14 oder 15, wobei ein Bindemittel auf oder in dem Schleier verteilt ist.

17. Strukturelle Verstärkung gemäß einem der Ansprüche 14 bis 16, wobei der Schleier eine größere Absorptionsgeschwindigkeit für Harz als die Fasern aufweist.

18. Strukturelle Verstärkung gemäß Anspruch 10 bis 17, wobei der Vorformling eine Textilie umfasst, welche einen Hybridgarn von zusammen gemischten strukturellen Fasern und thermoplastischen Fasern oder Garn von strukturellen Fasern und Garn von thermoplastischen Fasern umfasst.

19. Verfahren zum Herstellen eines Verbundmaterials, umfassend das Bilden eines Vorformlings durch Verbinden struktureller Trockenfasern mit nichtstrukturellen thermoplastischen Trockenfasern in einer Anordnung, um eine strukturelle Stoffkomponente bereitzustellen, wobei das Verbundmaterial kein zu einer Folie geformtes Faserverstärkungsmaterial umfasst, das sich aus Verstärkungsfasern und einem Non-Woven-Gewebe zusammensetzt, das auf wenigstens einer Seite des Faserverstärkungsmaterials laminiert ist, wobei die kurzen Fasern das durch das Faserverstärkungsmaterial passierende Non-Woven-Gewebe bilden, um das Faserverstärkungsmaterial mit dem Non-Woven-Gewebe zu integrieren, Einspritzen oder Einfließenlassen eines flüssigen Harzes in die strukturelle Stoffkomponente, und Härtenlassen der Flüssigharzkomponente.

20. Verfahren gemäß Anspruch 19, wobei der strukturellen Komponente vor der Harzkomponente ein Harzvernetzungsmittel beigegeben wird.

21. Verfahren gemäß Anspruch 20, wobei das Vernetzungsmittel in einem Material eingekapselt ist, welches bei einer ersten Temperatur schmilzt, und wobei der Vernetzungsschritt Erhöhen der Temperatur auf die erste Temperatur einbezieht, um das Vernetzungsmittel zu aktivieren.

22. Verfahren gemäß einem der Ansprüche 19 bis 21, wobei der Vernetzungsschritt wenigstens teilweise bei einer Temperatur unter dem Schmelzpunkt der thermoplastischen Fasern ausgeführt wird.

23. Verfahren nach einem der Ansprüche 19 bis 22, wobei der Vorformling in einer Mehrzahl von Textilschichten bereitgestellt wird und ein Schleier zwischen wenigstens einem benachbarten Paar von Schichten vor der Beigabe des Harzes bereitgestellt wird, wobei der Schleier eine dünne Schicht von gewebtem oder nicht gewebtem Material umfasst.

24. Verfahren gemäß Anspruch 23, welches Verteilen von Bindemittel auf oder in dem Schleier umfasst.

25. Verfahren gemäß einem der Ansprüche 19 bis 24, wobei der Harzeinspritzprozess ein Harzspritzpressverfahren oder Verbundharzspritzgießverfahren ist.

## Revendications

1. Composite comprenant un composant structural et un composant de résine, le composant structural comprenant des fibres structurales et un additif durcisseur comprenant des fibres thermoplastiques non structurales et le composant de résine comprenant un matériau non thermoplastique, et le composant structural étant une préforme comprenant un assemblage formé à partir de fibres structurales et de fibres thermoplastiques non structurales, dans lequel l'assemblage comprend des fibres thermoplastiques non structurales qui sont en forme de fibres dans le composite final dans lequel le composite ne comprend pas un matériau de renforcement des fibres en forme de feuille composé de fibres de renforcement et un tissu non tissé laminé sur au moins un côté du matériau de renforcement des fibres, les fibres courtes qui constituent le tissu non tissé traversant le matériau de renforcement des fibres afin d'intégrer le matériau de renforcement des fibres au tissu non tissé.

2. Composite selon la revendication 1, dans lequel le composant de résine est une composition de résine thermodurcissable.

3. Composite selon soit la revendication 1 ou la revendication 2, dans lequel le composant de résine est une composition de résine thermodurcissable à faible viscosité.

4. Composite selon l'une quelconque des revendications précédentes, dans lequel le pourcentage en volume de l'additif durcisseur dans le composite est supérieur à 2 %, mais inférieur à 30 %.

5. Composite selon l'une quelconque des revendications précédentes, dans lequel le volume de l'additif durcisseur est supérieur à 5 %, mais inférieur à 25 %.

6. Composite selon l'une quelconque des revendications précédentes, dans lequel le volume de l'additif durcisseur est supérieur à 10 %, mais inférieur à 20 %.

7. Composite selon l'une quelconque des revendications précédentes, dans lequel le composant de renforcement structural est proposé sous la forme d'une pluralité de couches de textile et au moins un voile est disposé entre une paire de couches adjacentes, le voile comprenant une couche mince matière tissée ou non tissée.

8. Composite selon l'une quelconque des revendications précédentes, dans lequel la fraction en volume des fibres structurales dans la préforme est d'au moins 65%.

9. Utilisation d'un renforcement structural dans la fabrication d'un composite par moulage de composite liquide, le renforcement structural comprenant une préforme comprenant un assemblage de fibres sèches formé à partir de fibres structurales et de fibres thermoplastiques non structurales dans lequel le composite ne comprend pas un matériau de renforcement des fibres en forme de feuille composé de fibres de renforcement et un tissu non tissé laminé sur au moins un côté du matériau de renforcement des fibres, les fibres courtes qui constituent le tissu non tissé traversant le matériau de renforcement des fibres afin d'intégrer le matériau de renforcement des fibres au tissu non tissé.

10. Renforcement structural à utiliser dans un composite comprenant une préforme qui comprend un assemblage fibreux sec formé à partir de fibres structurales et de fibres thermoplastiques non structurales, la fraction en volume des fibres structurales dans la préforme étant d'au moins 65 %.

11. Renforcement structural selon la revendication 10, dans lequel au moins une partie des fibres thermoplastiques sont semi-cristallines.

12. Renforcement structural selon soit la revendication 10 ou la revendication 11, comprenant encore un agent durcisseur de résine.

13. Renforcement structural selon la revendication 12, dans lequel l'agent durcisseur peut être activé en fonction de la température.

14. Renforcement structural selon l'une quelconque des revendications 10 à 13, dans lequel la préforme comprend des couches de textile et le composant de renforcement comprend en outre au moins un voile entre une paire de couches adjacentes, le voile étant formé à partir d'une couche mince de matière tissée ou non tissée.

15. Renforcement structural selon la revendication 14, dans lequel le voile comprend des fibres thermoplastiques.

16. Renforcement structural selon la revendication 14 ou la revendication 15, dans lequel le matériau du liant est réparti sur ou dans le voile.

17. Renforcement structural selon l'une quelconque des revendications 14 à 16, dans lequel le voile présente un rythme d'absorption plus rapide pour la résine que pour les fibres.

18. Renforcement structural selon les revendications 10 à 17, dans lequel la préforme comprend un textile comprenant un fil hybride de fibres structurales et de fibres thermoplastiques mélangées ou un fil de fibres structurales et un fil de fibres thermoplastiques.

19. Procédé de fabrication d'un composite comprenant la formation d'une préforme en combinant des fibres structurales sèches avec des fibres thermoplastiques non structurales sèches dans un assemblage afin de réaliser un composant de tissu structural, dans lequel le composite ne comprend pas un matériau de renforcement des fibres en forme de feuille composé de fibres de renforcement et un tissu non tissé laminé sur au moins un côté du matériau de renforcement des fibres, les fibres courtes qui constituent le tissu non tissé traversant le matériau de renforcement des fibres afin d'intégrer le matériau de renforcement des fibres au tissu non tissé, l'injection ou la diffusion d'une résine liquide dans le composant de tissu structural, et le durcissement du composant de résine liquide.

20. Procédé selon la revendication 19, dans lequel un agent durcisseur de résine est ajouté au composant structural avant le composant de résine.

21. Procédé selon la revendication 20, dans lequel l'agent durcisseur est encapsulé dans un matériau qui fond à une première température et dans lequel l'étape de durcissement implique d'augmenter la température jusqu'à la première température afin d'activer l'agent durcisseur.

22. Procédé selon l'une quelconque des revendications 19 à 21, dans lequel l'étape de durcissement est au mois partiellement mise en oeuvre à une température inférieure au point de fusion des fibres thermoplastiques.

23. Procédé selon l'une quelconque des revendications 19 à 22, dans lequel la préforme est proposée en une pluralité de couches de textile et un voile est disposé entre au moins une paire de couches adjacentes avant l'addition de la résine, le voile comprenant une couche mince de matière tissée ou non tissée.

24. Procédé selon la revendication 23 comprenant la répartition du matériau de liant sur ou dans le voile.

25. Procédé selon l'une quelconque des revendications 19 à 24, dans lequel le procédé d'injection de résine est le moulage par transfert de résine ou le moulage par injection de résine composite.
